# EUROPÄISCHE PATENTANMELDUNG

(11) **EP 1 529 921 A2**
(43) Veröffentlichungstag der Anmeldung: **11.05.2005**
(21) Anmeldenummer: 04405662.0
(22) Anmeldetag: 27.10.2004
(51) Int. Cl.: E06B 3/663

(54) **Eine einen Wärmedurchgang reduzierende Verschlusseinheit**

(30) Priorität: 27.10.2003 CH 18282003
(71) Anmelder: Wüthrich, Werner, 3073 Gümligen (CH)
(72) Erfinder: Wüthrich, Werner, 3073 Gümligen (CH)
(74) Vertreter: Roshardt, Werner Alfred, Dipl.-Phys.

(57) **Zusammenfassung**

Die insbesondere als thermisch isolierende Glasscheibenanordnung ausgebildete Verschlusseinheit **(1)** hat eine Innenscheibe **(3)** und eine von der Innenscheibe **(3)** distanzierte Aussenscheibe **(5).** Ein Verbindungselement **(20)** verbindet die Innenscheibe **(3)** mit der Aussenscheibe **(5)** nicht starr, sondern gegeneinander bewegbar, wodurch insbesondere eine Walkbewegung ermöglicht wird, um beispielsweise thermische Dilatationsunterschiede zwischen Innen- und Aussenscheibe **(3, 5)** auszugleichen.

Die Verschlusseinheit **(1)** hat ein Ventil, mit dem unter Verwendung einer Nachevakuierungseinrichtung **(83)** nachevakuiert werden kann. Das Ventil kann mit der Nachevakuierungseinrichtung **(83)** unter Vakuum geöffnet und wieder geschlossen werden.

## Beschreibung

### Technisches Gebiet

Die Erfindung betrifft eine Verschlusseinheit, welche einen geringen Wärmedurchgang zwischen einem Innen- und einem Aussenraum aufweist. Die Verschlusseinheit dient zum Verschluss eines Durchbruchs in einer Wand zwischen einem Innen- und einem Aussenraum. Die Verschlusseinheit hat eine Innenscheibe und eine von der Innenscheibe distanzierte Aussenscheibe. Zwischen der Innen- und der Aussenscheibe herrscht ein Innengasdruck, der gegenüber dem Umgebungsdruck ausserhalb der Innen- bzw. Aussenscheibe reduziert ist. Innen- und Aussenscheibe sind im Bereich ihrer Ränder gasdicht miteinander verbunden.

Die Verschlusseinheit, sofern sie durchsichtig ausgebildet ist, stellt ein Fenster oder eine durchsichtige Türe bzw. Klappe dar. Die Verschlusseinheit kann jedoch auch als undurchsichtige Türe, Schieber oder Klappe oder sogar als Wandelement ausgebildet sein.

### Stand der Technik

In der US 5,657,607 ist eine thermisch isolierende Glasscheibenanordnung beschrieben. Die Anordnung bestand aus zwei einander gegenüberliegenden Scheiben, welche durch Noppen in einem gegenseitigen Abstand gehalten wurden. Jede Noppe war eine Kugel aus Glas, Keramik, Metall oder einem anderen Material, welches mit einem schmelzbaren Glas umhüllbar war. Jede Noppe bildete eine feste Verbindung im Scheibenzwischenraum mit den Innenseiten der Scheiben. Jede Noppe konnte als Ellipse, Zylinder oder Prisma ausgebildet sein. Es wurden Werte für den Noppendurchmesser und deren gegenseitigen Abstand ermittelt. Der Abstand der Innenscheibe von der Aussenscheibe sollte so klein wie möglich gehalten werden; d.h. der Gasdruck zwischen den Scheiben sollte mindestens so weit abgesenkt werden, bis die freie mittlere Weglänge der Gasmoleküle grösser war als der Scheibenabstand. Erst ab einem derart kleinen Druck ergibt sich bei einer Druckreduzierung auch eine Reduzierung des Wärmedurchgangs durch die Scheibenanordnung. Bei einem Noppenradius von 0,2 mm sollte der minimale Abstand der Noppen 30 mm betragen.

Für eine Reduktion des Wärmetransports durch die Scheibenanordnung wurden die Innenseiten der Scheiben mit einem im sichtbaren transparenten Wärmestrahlungsreflektor beschichtet. Als Beschichtungen wurden Indium-Zinn-Oxid, Zinn-Oxid, oder sehr dünne Metallbeschichtungen empfohlen. Die beiden Scheiben wurden am ihrem Rand starr mit einem schmelzbaren Glas verbunden.

Der Gasdruck zwischen den beiden Scheiben war unter 10⁻² Torr bei einem Scheibenabstand zwischen 0,01 mm und 1,00 mm. Zum Abpumpen wurde die Scheibenanordnung auf eine Temperatur von 200°C bis 300°C gebracht. In der US 5,657,607 wurde ferner vorgeschlagen, einen Getter zu verwenden, wobei der Getter als eine Scheibeninnenbeschichtung mit Barium oder Aluminium sein konnte; der Getter konnte aber auch in einer Vertiefung in der Scheibeninnenseite angeordnet sein und dann von aussen gezündet werden. Eine Verwendung weiterer Gettermaterialien (Aluminium, Barium, Strontium, Titan oder Zirkon) und deren Einsatz ist in der WO 01/12942 beschrieben. Zusätzliche Angaben hierzu macht auch noch die EP 1 439 152.

Der Scheibeninnenraum wurde über einen dünnen Pumpstutzen abgepumpt, der nach dem Abpumpen vakuumdicht zugeschmolzen wurde.

Die US 5,664,395 beschreibt eine zur US 5,657,607 analoge Glasscheibenanordnung.

Die als Noppen ausgebildeten Abstandshalter wurden hier in ihrem thermischen Ausdehnungsverhalten demjenigen des Glases der Scheiben angepasst, wobei Abstandshalter aus unterschiedlichen Materialien zusammen verwendet wurden und unterschiedliche räumlich Abstände hatten. Als Materialien wurden Metalle wie Nickel, Eisen, Molybdän, Wolfram, Tantal, Titan, Aluminium, Stahl oder Stahllegierungen vorgeschlagen. Zum Vermeiden von Spannungen in den Scheiben, hervorgerufen durch atmosphärische Druckschwankungen, konnten die Scheiben vorgespannt werden. Es wurde auch vorgeschlagen den Scheibenrand zu verstärken.

Die US 5,902,652 beschreibt eine zur US 5,664,395 analoge Scheibenanordnung, wobei lediglich eine der Scheiben etwas über die andere vorsteht. Es soll sich hierdurch eine bessere Verschweissung der beiden Scheibenränder von Innen- und Aussenscheibe miteinander ergeben. Analoges ist auch in der WO 01/ 34932 beschrieben, wobei hier besonderes Augenmerk auf eine Anordnung des Vakuumabsaugstutzens gelegt wurde, der durch die starre Scheibenrandverschweissung in den Zwischenraum der beiden Scheiben geführt wurde.

In der EP 1 422 204 wurde mit Blick auf die starren Scheibenrandverschweissungen herausgefunden, dass ein niedrig schmelzendes, die beiden Glasscheiben vakuumdicht verbindendes Glaslot zum Scheibenzwischenraum hin eine ausgebeulte Kontur haben sollte, damit aufgrund von Luftdruckschwankungen, welche auf die Scheiben wirken, eine Rissbildungswahrscheinlichkeit im Glaslot verringerbar sein sollte.

Die EP 0 645 516 beschreibt ebenfalls eine thermisch isolierende Zweischeibenanordnung. Die Anordnung hatte hier eine Vakuumabsaugöffnung, welche mit einer schmelzbaren Glaskugel verschliessbar war, wobei der Schmelzpunkt der Kugel unter demjenigen des Scheibenglases lag.

Im Gegensatz zur EP 0 645 516 wurde bei der WO 01/75260 eine eine Absaugöffnung verschliessende Platte aufgeschweisst. Während des Absaugvorgangs war diese Platte durch das noch ungeschmolzene lediglich in voneinander distanzierten Bereichen aufgebrachte "Glaslot" von der Absaugöffnung distanziert, um einen Absauggasstrom zu ermöglichen. Durch Erwärmen verlief das Glaslot und die Platte sank auf die Absaugöffnung diese dicht verschliessend.

Die in der EP 0 787 241 beschriebene thermisch isolierende Glasscheibenanordnung ähnelt einer in der US 5,657,607, der US 5,664,396 und der US 5,902,652 beschriebenen Anordnung; es wurden lediglich die Abstandshalter zwischen den beiden Scheiben verändert. Es wurde vorgeschlagen, jetzt im Wesentlichen zylindrische Abstandshalter mit einem stabilen Kern und weichen Randgebieten, benachbart zu den Scheibeninnenseiten, zu verwenden. Es sollten sich hierdurch Spannungen in den Scheiben vermeiden lassen. Die Abstandshalter hatten einen Durchmesser zwischen 0,2 mm und 0,3 mm und eine Höhe von 0,1 mm bis 0,2 mm. Das jeweilige Randgebiet der Abstandshalter hatte eine Dicke im Bereich von 30 µm.

In der Veröffentlichung "Current Status of the Science and Technology of Vacuum Glazing"; R.E. Collins, 8. Oktober 1997, Solar Energy Vol. 62, No. 3, Seiten 189 - 213 wurden die in der US 5,657,607, der US 5,664,396, der US 5,902,652 und der EP 0 787 241 beschriebenen Scheibenanordnungen in wissenschaftlicher Weise erklärt.

In der WO 00/29703, der WO 00/29704 und der WO 01/09471 sind Evakuierungsmethoden für die in der US 5,657,607, der US 5,664,396, der US 5,902,652 und der EP 0 787 241 gezeigten Glasscheibenanordnungen beschrieben. Über einem Absaugstutzen wurde eine metallische Haube mit einem Anschluss an eine Vakuumpumpe angeordnet. Der Absaugstutzen ragte in einen Raum der metallischen Haube hinein und war mit einem Metallfilament umgeben. Das Filament war durch einen elektrischen Strom derart erhitzbar, dass das Stutzenende vakuumdicht zusammen geschmolzen werden konnte. Ein auf der Scheibenoberseite aufliegender, umlaufender Haubenfuss wies einen ringförmigen Halbraum auf, der durch die Scheibenoberseite abgeschlossen wurde. Dieser Halbraum war mit einer zweiten Vakuumpumpe verbunden und evakuierbar. Auf diesen mit einer zweiten Vakuumpumpe zusammenarbeitenden Halbraum verzichtete die WO 01/09471; sie führte jedoch aus, welche Vorkehrungen zu treffen wären, damit ein Brechen des zusammengeschweissten Abpumpstutzens vermieden werden könnte. In der EP 1 404 225 wurde der Einschmelzprozess für einen Absaugstutzen im Detail beschrieben, wobei ein niedrig schmelzendes Glas mit einer vorgegebenen Viskosität verwendet wurde.

Die in der WO 00/77336 beschriebene thermisch isolierende Glasscheibenanordnung ist eine Weiterentwicklung zu den in der US 5,657,607, der US 5,664,396, der US 5,902,652, der EP 0 787 241, der WO 00/29703 und der WO 00/29704 beschriebenen Anordnungen. Er wird hier lediglich die Herstellung einer starren Randverschweissung der beiden Glasscheiben mit einem sogenannten "solder glass band" offenbart.

### Darstellung der Erfindung

### Aufgabe

Aufgabe der Erfindung ist es, eine Verschlusseinheit mit einem geringen Wärmedurchgang zu schaffen, welche gegenüber den aus dem Stand der Technik bekannten, lediglich als Fenster verwendbaren thermisch isolierenden Glasscheibenanordnungen, eine bedeutend längere Lebensdauer d.h Verwendbarkeit aufweist.

### Lösung

Die Lösung der Aufgabe erfolgt durch die Merkmale des Patentanspruchs 1, wobei insbesondere für eine spätere Nachevakuierung eine Nachevakuierungseinrichtung gemäss den Merkmalen des Patentanspruchs 10 verwendbar ist.

Die erfindungsgemässe Verschlusseinheit mit den in der Einleitung angeführten beispielsweisen Einsatzorten, hat eine von einer Aussenscheibe mit einem geringen Abstand distanzierte Innenscheibe. Zwischen den Scheiben herrscht ein reduzierter Innengasdruck, wie unten ausgeführt wird. Bei der erfindungsgemässen Verschlusseinheit werden nun im Gegensatz zum Stand der Technik Innen- und Aussenscheibe nicht mehr starr miteinander verbunden, sondern gegeneinander bewegbar angeordnet. Die Bewegbarkeit weist keine grossen Strecken auf; sie dient nur dazu Bewegungen zwischen der Innen- und Aussenscheibe auszugleichen. Es handelt sich hier um Wege im Millimeter- und Submillimeterbereich. Durch diese geringe Beweglichkeit werden auf die Innen- und/oder die Aussenscheibe unterschiedlich wirkende Kräfte ausgeglichen. Diese unterschiedlichen Kräfte können u.a. durch den Winddruck in der Regel auf die Aussenscheibe, durch unterschiedliche Temperaturen zwischen Innen- und Aussenscheibe hervorgerufen werden. Wird die Verschlusseinheit z. B. von Versuchskammern verwendet, können auch auf Innen- und Aussenscheibe unterschiedliche Drücke wirken.

Die geringe Bewegung an den Scheibenrändern zum Kräfteausgleich kann durch eine zugelassene Schiebebewegung erfolgen, besser ist es jedoch diese Schiebebewegung zu vermeiden und eine Walkbewegung zu ermöglichen. Eine Walkbewegung hat ein besseres Abdichtverhalten als eine Schiebebewegung.

Die Wärmeleitfähigkeit durch einen Zwischenraum mit einem reduzierten Innengasdruck nimmt merklich erst ab, wenn der Innendruck derart stark reduziert ist, dass die mittlere freie Weglänge der Restgasmoleküle im Zwischenraum grösser ist als der Scheibenabstand in betrachteter Wärmedurchgangsrichtung. Wird der Innengasdruck von diesem Punkt an weiter reduziert, verringert sich die Wärmeleitfähigkeit stetig mit der Druckabnahme (Knudse-Effekt).

Um nun einen sehr tiefen Druck umgehen zu können, muss somit die Dicke eines Zwischenraums zwischen der Innenseite (Innenhauptscheibenseite) der Innenscheibe und der Innenseite der Aussenscheibe sehr klein gehalten werden. Es sind somit Drücke von 0,1 · 10⁻³ Torr bei einem typischen Scheibenabstand von 0,1 mm notwendig. Da die mittlere freie Weglänge auch temperaturabhängig ist, wird man beim Evakuieren erwärmen. Eine höhere Temperatur zieht eine kürzere freie mittlere Weglänge nach sich als eine tiefe Temperatur. Eine höhere Temperatur erzeugt auch einen höheren Gasdruck. Bei einer höheren Temperatur kann somit auch pro Zeiteinheit eine grössere Gasmenge abgepumpt werden. Eine Erwärmung wird hier auf etwa 130 °C aufgrund der unten beschriebenen Materialien beim Evakuieren eingestellt.

Da nun der Scheibenabstand an den zu erreichenden Innendruck gebunden ist, verwendet die Erfindung in einer bevorzugten Ausführungsvariante nicht wie im Stand der Technik beschrieben, nur einen einzigen Zwischenraum, sondern mehrere Zwischenräume, gebildet durch zwischen der Innen- und der Aussenscheibe angeordnete voneinander distanzierte Zwischenscheiben. Für jeden Scheibenzwischenraum gilt das oben Gesagte. Sofern man sich im Bereich des Knudse-Effektes befindet, bewirkt eine Zwischenscheibe bei gleicher Zwischenraumdicke zwischen den Scheibenoberflächen eine Reduzierung der Wärmeleitfähigkeit um den Faktor 2; bei zwei Zwischenscheiben um den Faktor 3, und so weiter.

Wie bereits oben ausgeführt, ist um eine gute Wärmeisolierung, also eine schlechte (geringe) Wärmeleitfähigkeit, zu erreichen, ein tiefer Druck zwischen Innen- und Aussenscheibe notwendig. Dieser tiefe Druck muss über einen langen Zeitraum (einige Jahre) aufrecht erhalten werden können. Bei einer Verwendung der Verschlusseinheit als Fensterscheibe, kann diese nun einmal nicht alle paar Monate ausgewechselt werden. Beim Stand der Technik hat man versucht, dies durch eine starre Scheibenverbindung zu erreichen. Man hat jedoch übersehen, dass die mechanischen Wechselbeanspruchungen auf die Scheibenanordnung der starren Verbindung arg zugesetzt hatte, worauf sich in dieser Risse bilden konnten. Diese Risse waren dann die Ursache für eine Verschlechterung des Innenvakuums und eine Zunahme der Wärmeleitfähigkeit. Wie bereits oben ausgeführt, geht nun die Erfindung einen anderen Weg und lässt gerade an den Scheibenrändern eine Scheibenbewegung zu.

Der oder die Zwischenräume zwischen den Scheiben müssen nun eine gute Abdichtung erhalten. Eine gute Abdichtung würde sich mit einem Verbindungsmittel ergeben, welches einen O-Ring als Dichtmittel hätte. Dieser O-Ring müsste dann in Längsrichtung geschlossen sein. Er würde zwischen den Scheiben angeordnet. Durch den auf den Scheiben lastenden Ausdruck würde eine starke, vakuumdichte Pressung erfolgen. Diese vakuumdichte Pressung setzt allerdings einen annähernd gleichen Flächendruck auf diesen O-Ring voraus. Verschlusseinheiten wie z.B. Fensterscheiben, werden in der Regel rechteckig ausgebildet. In den Ecken wäre dann der auf dem O-Ring lastende Flächendruck geringer als an den Längsseiten. Anstelle einer viereckigen Verschlusseinheit wäre lediglich eine runde Verschlusseinheit ideal. Einen ausreichenden Kompromiss geben abgerundete Ecken mit einem Radius von grösser als 25 mm.

Rahmen für Verschlusseinheiten (Fenster) haben nun aber keine runden Ecken. Um dieses Problem zu umgehen, werden nun nicht die Innen- und die Aussenscheibe, obwohl auch dieses möglich wäre, aus Kostengründen abgerundet, sondern lediglich die Zwischenscheibe bzw. -scheiben. Das Dichtmittel wird dann in unmittelbarer Nähe der Stirnseite der Zwischenscheibe bzw. -scheiben verlegt.

Übliche O-Ringe bestehen aus Gummi oder Kunststoff. Gummi und Kunststoff gasen bei tiefen Drücken, zudem sind beide Materialien nicht hitzbeständig. Um dennoch ein ausreichendes Dichtmittel zu erhalten, nimmt man vorzugsweise einen O-Ring aus einem Fluorelastomer, den man mit einer Metallbeschichtung versieht, die ein Ausgasen verhindert, aber die Elastizität des darunter liegenden Materials noch wirken lässt. Eine derartige Beschichtung liegt im Mikrometerbereich.

Wird das oben angeführte Fluorelastomer verwendet, wird auf dessen Mantel eine Haftschicht aufgebracht und auf die Haftschicht dann die Metallbeschichtung. Die Metallbeschichtung sollte nicht all zu hart sein, damit sie sich gut an die Scheibeninnenseiten anpassen kann. Vorzugsweise wird man Kupfer oder Silber verwenden.

Anstelle eines Fluorelastomer-Vollrings kann auch ein Metallrohr verwendet werden, welches dann beispielsweise mit Kupfer oder Silber beschichtet wird. Als Metallrohr wird man vorzugsweise ein dünnes Stahlrohr verwenden, welches die für die Abdichtung erforderliche Elastizität aufweist.

Durch den Einsatz wenigstens einer Zwischenscheibe kann nun auch das Dichtmittel gegenüber einer Anordnung mit nur einer Innen- und einer Aussenscheibe im Durchmesser grösser ausgebildet werden. Aufgrund des grösseren Durchmessers ergibt sich eine grössere Auflagefläche des durch den Flächedruck gequetschten Dichtmittels, was wiederum eine verbesserte Abdichtung nach sich zieht.

Auf der Innen- und der Aussenscheibe lastet bei den notwendigen tiefen Drücke im Bereich von 10⁻³ Torr ein grosser Flächendruck, welcher die Scheiben mit einem gegenseitigen Abstand im Millimeter- und Submillimeterbereich bis auf eine gegenseitige Berührung gegeneinander drücken würde. Hierdurch würde sich jedoch die Wärmeleitfähigkeit wieder erhöhen.

Um eine berührende Annäherung der Hauptscheibenseiten zu verhindern, werden Abstandshalter im Zwischenraum vorgesehen. Diese Abstandshalter können als Noppen ausgebildet sein, wie in den oben zitierten Druckschriften zum Stand der Technik ausgeführt wurde. Man kann aber auch abweichend vom Stand der Technik fadenförmige Abstandshalter verwenden. Diese fadenförmigen Abstandshalter können nun über die Fadenlänge einen annähernd gleichen Durchmesser oder einen wechselnden Durchmesser ("Perlenkette") haben. Ein fadenförmiger Distanzhalter hat gegenüber den aus dem Stand der Technik bekannten Noppen den Vorteil, dass er einfacher und schneller verlegbar ist. Der Faden braucht nämlich nur an den Scheibenrändern fixiert oder gehalten werden. Man kann ihn beispielsweise um die Zwischenscheibe herum wickeln. Dieses "Herumwickeln" hat zudem den Vorteil, dass sich eine räumliche Zuordnung der Auflageorte auf den beiden Oberseiten der Zwischenscheibe und den Innenseiten der Innen- und Aussenscheiben ändert. Durch diese nun nicht mehr ein gleichmässiges Raster bildende Auflage, ergibt sich eine Verbesserung der Schallisolation, da eine resonate, mechanische "Aufschaukelung" weitestgehend unterbunden ist. Eigenschwingungen können somit unterdrückt werden.

Wird ein fadenförmiger Distanzhalter z.B. als Lichtleiter ausgebildet, kann er zudem als Einbruchmelder verwendet werden. Ist der Faden durchtrennt, ist auch ein in ihm geführter Lichtstrahl unterbrochen. Dieser Unterbruch ist einfach zu detektieren und kann ein entsprechendes Alarmsignal auslösen.

Da der fadenförmige Distanzhalter bei den kleinen Abständen einen kleinen Durchmesser hat, fällt er auch bei einer nicht transparenten Ausführung, z.B. als Metalldraht, nicht weiter im Durchblick auf. Auch ein derartiger Faden kann als Einbruchmelder verwendet werden. Wird jedoch der Faden aus einem elektrischen Widerstandsmaterial gebildet, kann eine Zwischenraumheizung vorgenommen werden, welche insbesondere bei einer unten erwähnten Nachevakuierung von Vorteil ist.

Die in den oben angeführten Druckschriften beschriebenen Glasscheibenanordnungen werden einmal evakuiert und der Evakuierungsanschluss wird für immer zugeschweisst. In einer bevorzugten Ausführung der Erfindung ist nun eine Nachevakuierung vorgesehen. Der Evakuierungsanschluss wird nun nicht mehr zugeschmolzen, sondern als ein vakuumdichtes, aber aufschraubbares Verschlusselement ausgebildet. Das Verschlusselement ist im Wesentlichen eine Mutter, welche auf ihrer Oberseite Anschlussmittel für ein eine Drehbewegung ausführendes Werkzeug hat. Die Verschlusselementoberseite ist vorzugsweise bündig mit der jeweiligen Scheibenaussenseite ausgebildet.

Zum Nachevakuieren wird eine Nachevakuierungseinrichtung über das Verschlusselement gestellt. Das Nachevakuierungselement ist haubenartig mit einem Haubenfuss ausgebildet. Der Haubenfuss hat ein umlaufendes, über die Haubenfussstirnseite vorstehendes Dichtelement. Die Haube hat ferner einen Anschluss an eine Vakuumpumpe und einen von ausserhalb der Haube wirkenden Kraftantrieb für ein verdrehbares Eingreifelement für einen mechanischen Eingriff in die Oberseite des Verschlusselements. Ist die Haube über das Verschlusselement gesetzt, kann dieses durch den Kraftantrieb herausgedreht werden.

Zum Nachevakuieren wird die Haube an eine Vakuumeinheit angeschlossen und evakuiert, bis in der Haube annähernd der gleiche Druck erreicht ist, wie er zwischen der Innen- und Aussenscheibe herrscht. Erst jetzt wird die Verschlusseinheit herausgedreht und zwischen Innen- und Aussenscheibe evakuiert. Ist der geforderte Druck erreicht, wird das Verschlusselement wieder eingeschraubt. Ausführungsvarianten der Nachevakuierungseinheit sind unten beschrieben.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen in
- Fig. 1: eine Draufsicht auf eine Ausführungsvariante der erfindungsgemässen Verschlusseinheit,
- Fig. 2: einen Querschnitt entlang der in **Figur 1** gezeigten Linie II - II der dortigen Verschlusseinheit,
- Fig. 3: eine zu **Figur 2** analoge Darstellung, wobei hier jedoch die Innenscheibe der Verschlusseinheit gegenüber deren Aussenscheibe sich stärker gegenüber einem in Figur 2 dargestellten Zustand ausgedehnt hat,
- Fig. 4: eine zu **Figur 2** analoge Darstellung, wobei hier jedoch die Aussenscheibe der Verschlusseinheit gegenüber deren Innenscheibe sich stärker gegenüber einem in **Figur 2** dargestellten Zustand ausgedehnt hat,
- Fig. 5: einen Querschnitt durch eine auf eine Verschlusseinheit aufgesetzte Nachevakuierungseinheit,
- Fig. 6: einen Querschnitt durch eine Variante einer Verschlussöffnung, wie sie zusammen mit der in **Figur 5** dargestellten Nachevakuierungseinheit verwendbar ist,
- Fig. 7: eine Draufsicht auf eine Variante zu der in **Figur 1** dargestellten Verschlusseinheit und
- Fig. 8: eine Variante zu der in **Figur 5** dargestellten Nachevakuierungseinheit.

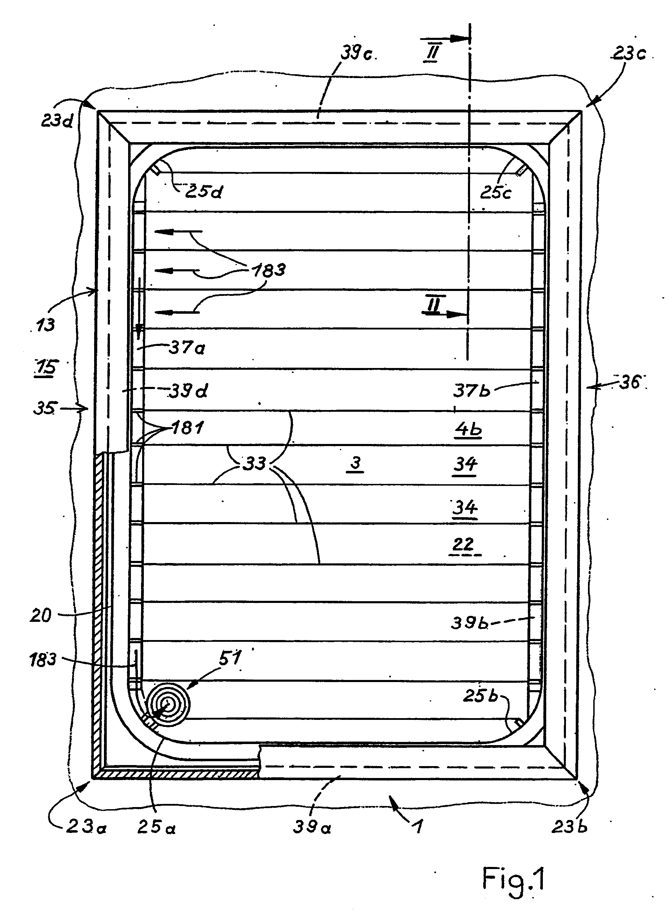

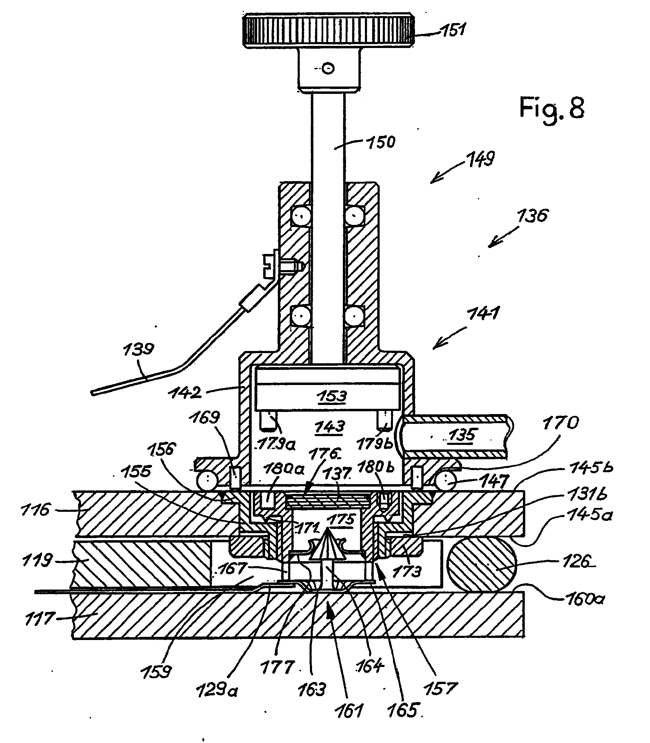

Die Darstellung in den Figuren 1 und 8 ist gegenüber derjenigen in den restlichen Figuren verkleinert, wobei die Darstellung in den restlichen Figuren gegenüber den tatsächlichen Abmessungen vergrössert ist.

### Wege zur Ausführung der Erfindung

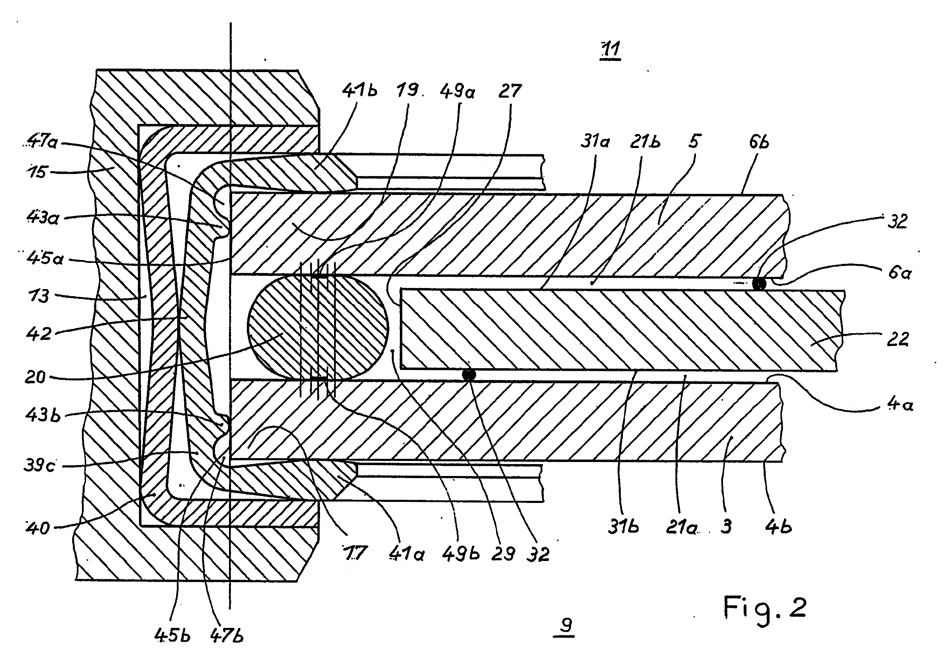

Die in **Figur 1** in einer Draufsicht und in **Figur 2** im Querschnitt dargestellte Verschlusseinheit **1** ist hier beispielsweise als thermisch isolierende Glasscheibenanordnung (Fenster) ausgebildet und hat eine Innenscheibe **3**, eine Aussenscheibe **5** sowie eine Zwischenscheibe **22**. Die Verschlusseinheit **1** ist derart ausgebildet, dass sie einen geringen Wärmedurchgang zwischen einem Innenraum **9** und einem Aussenraum **11** hat. Sie ist in einem Durchbruch **13** in einer Wand **15** zwischen dem Innen- und Aussenraum **9** und **11** angeordnet. Die Innenscheibe **3** ist von der Aussenscheibe **5** distanziert angeordnet. Zwischen der Innen- und der Aussenscheibe **3** und **5** besteht ein reduzierter Innengasdruck gegenüber einem Umgebungsdruck ausserhalb der Innen- bzw. Aussenscheibe **3** bzw. **5,** d.h. gegenüber dem Innen- bzw. Aussenraum **9** bzw. **11.** Die Innen- und die Aussenscheibe **3** und **5** sind im Bereich ihrer Scheibenränder **17** und **19** mittels eines Verbindungselements **20** gasdicht verbunden. Das Verbindungselement **20** verbindet nun die Innen- und die Aussenscheibe **3** und **5** nicht, wie beim Stand der Technik üblich, starr, sondern derart, dass beide Scheiben **3** und **5** gegeneinander einen kleinen Weg bewegbar sind. Es handelt sich jedoch nur um eine kleine Bewegung, wie sie z.B. durch eine thermische Dilatation der Innenscheibe **3** gegenüber der Aussenscheibe **5,** hervorgerufen durch Temperaturunterschiede zwischen dem Innenraum **9** und dem Aussenraum **11** vorkommen kann. Eine Scheibenbewegung kann auch hervorgerufen werden durch einen Winddruck auf eine der beiden Scheiben **3** oder **5,** wodurch dann eine Verbiegung beider Scheiben **3** und **5** sich ergibt. Vorzugsweise wird man das Verbindungselement **20** derart ausbilden, dass es zwischen der Innenscheibe **3** und der Aussenscheibe **5** eine Walkbewegung ausführen kann. Eine auf das Verbindungselement **20** wirkende Walkbewegung gewährleistet eine bessere Abdichtung als eine reine Schiebebewegung.

Wie bereits einleitend ausgeführt wurde, muss bei einer guten Wärmedämmung ein Scheibenabstand gewählt werden, der kleiner ist als die mittlere freie Weglänge der Moleküle des Restgases im Zwischenraum. In dem hier gewählten Ausführungsbeispiel der Erfindung wird zwischen der Innenscheibe und der Aussenscheibe eine Zwischenscheibe 22 angeordnet. Wodurch zwei thermisch isolierende Zwischenräume **21a** und **21b** entstehen. Die Zwischenscheibe **22** liegt "frei" zwischen der Innen- und der Aussenscheibe **3** und **5**. In ihrer Lage wird die Zwischenscheibe **22** seitlich durch das Verbindungselement **20** und mit den unten beschriebenen Abstandshaltern **32** gegenüber den Hauptflächen der Scheiben **3** und **5** gehalten.

Selbstverständlich könnte auch ohne Zwischenscheibe **22** mit den oben bereits angeführten Nachteilen gearbeitet werden. Es könnten auch statt einer, mehrere Zwischenscheiben verwendet werden. Betrachtet man den Nutzen zum Aufwand, lassen sich bereits mit nur einer Zwischenscheibe **22** gute Ergebnisse erzielen.

Wie in **Figur 1** gut zu sehen ist, ist die Zwischenscheibe im Grossen und Ganzen rechteckig ausgebildet. Die Scheibenränder der Zwischenscheibe **22** laufen nun in den Ecken **23a** bis **23d** nicht unter einem vorgegebenen Winkel zusammen; die Bereiche der Ecken **23a** bis **23d** weisen Rundungen **25a** bis **25d** auf. Die Innen- und die Aussenscheibe **3** und **5** hingegen können in den Ecken ohne Bildung einer Rundung unter einem Winkel zusammenlaufen. In der Regel wiesen die Innen- und Aussenscheibenecken einen Winkel von 90° auf; es können aber auch andere Winkel gewählt werden.

Wie bereits oben ausgeführt, ist die Abdichtung zwischen der Innenscheibe **3** und der Aussenscheibe **5** nicht starr als eine Verschweissung, wie beim Stand der Technik, ausgebildet; die Abdichtung erfolgt hier durch eine abdichtende Auflage. Um eine gute abdichtende Auflage zu erreichen, muss der Auflagedruck auf das Verbindungselement **20** als Abdichtmittel auf dessen gesamten Länge möglichst gleich gross sein. Bei einem viereckig verlegten Abdichtmittel reduziert sich der Auflagedruck in den Ecken. Ein über der gesamten Länge gleich grosser Auflagedruck lässt sich lediglich bei einer kreisförmigen Anordnung erreichen. Um diesen Idealfall möglichst nahe zu kommen, wird eine Rundung des Abdichtmittels (Verbindungselement **20**) mit einem Radius von grösser als 25 mm vorgeschlagen. Ein Abdichtmittel lässt sich nun in einer derartigen Form nicht ohne Weiteres auf lange Zeit halten. Um diese Form zu erreichen, wird nun vorgeschlagen, die Zwischenscheibe **22** mit einer derartigen Randkontur auszubilden und das als Abdichtmittel wirkende Verbindungselement **20** entlang der Stirnseite **27** der Zwischenscheibe 22 zu legen. Vorzugsweise wird der Längsumfang des Abdichtmittels **20** etwas grösser als der Längsumfang der Stirnseite **27** der Zwischenscheibe **22** gewählt. Hierdurch entsteht ein kleiner Zwischenraum **29** bzw. Spalt zwischen dem Abdichtmittel **20** und der Stirnseite **27.** Da sich am Ort des Abdichtmittels **20** die Innenscheibe **3** gegenüber der Aussenscheibe **5,** wie oben ausgeführt ist, bewegen kann, ist durch diesen Zwischenraum **29** Platz für eine Walkbewegung geschaffen worden. Eine Walkbewegung zeigt nämlich ein besseres Abdichtverhalten als eine Schiebebewegung über dem Abdichtmittel **20.**

Einmal montiert, kann das Abdichtmittel **20** nicht mehr herausfallen. Die Zwischenscheibe **22** ist kleiner als die Innen- und die Aussenscheibe **3** und **5;** das Abdichtmittel **20** wird somit gegen innen und aussen durch die Innenseiten **4a** und **6a** der Innen- und Aussenscheibe **3** und **5** gehalten und ein Verrutschen gegen das Innere der Verschlusseinheit (Glasscheibenanordnung / Fenster) wird durch die Stirnseite **27** der Zwischenscheibe **22** unterbunden.

Im evakuierten Zustand wird dann das beim Einlegen im Querschnitt annähernd runde Abdichtmittel **20** durch den auf den Aussenseiten **4b** und **6b** der Innen- und der Aussenscheibe **3** und **5** lastenden Gasdruck auf seinen Anlegeflächen an den Innenseiten **4a** und **6a** der Innen- und der Aussenscheibe **3** und **5** platt gedrückt, wodurch sich die abdichtende Fläche vergrössert.

Das Verbindungselement **20** als Abdichtmittel ist als elastisch federndes, in sich längs geschlossenes Element ausgebildet. Um eine gute Abdichtwirkung zu entfalten, benötigt das Abdichtmittel **20** eine Oberfläche, welche sich an die Innenseiten **4a** und **6a** der Innen- und Aussenscheibe **3** und **5** gut anschmiegen kann. Da die Verschlusseinheit **1,** wie oben ausgeführt, auf einen relativ tiefen Innendruck evakuiert wird, darf das Abdichtmittel **20** auch bei diesen tiefen Drücken nicht ausgasen. Da ferner die Verschlusseinheit **1** zur Beschleunigung des Evakuierens auf etwa 130 °C erwärmt wird, muss das Abdichtmittel **20** auch diese Temperatur aushalten.

Handelsübliche Gummi-Dichtringe (O-Ringe) kommen somit nicht in Frage. Gute Ergebnisse konnten jedoch mit einem Fluorelastomer erreicht werden. Analoge Kunststoffe lassen sich selbstverständlich verwenden. Eine Gefahr des Ausgasens bei tiefen Drücken kann eliminiert werden, wenn der Mantel von Kunststoffdichtringen mit einem metallischen Überzug versehen wird. In der Regel kann der metallische Überzug nicht direkt auf den Kunststoffmantel aufgebracht werden; es muss erst eine Haftschicht aufgebracht werden. Als Materialien für einen metallischen Überzug eignen sich in der Regel weiche Metalle, wie Kupfer und Silber (natürlich auch Gold, was natürlich aufgrund seines hohen Preises heraus fällt).

Anstelle eines im Querschnitt vollen Ringes aus Kunststoff, kann auch ein Rohr mit einer entsprechend behandelten Oberfläche verwendet werden. Es können somit dünnwandige Stahlrohre, z.B. mit der oben erwähnten Kupferbeschichtung (oder Silber), verwendet werden. Der Rohrinnenraum muss jedoch zum Druckausgleich wenigstens eine Öffnung zum Inneren der Verschlusseinheit **1** haben.

Anstelle eines Vollrohres kann jedoch auch ein geschlitztes Rohr mit oder ohne Beschichtungen verwendet werden. Man kann auch ein geschlitztes Rohr verwenden, dessen Schlitzränder zur Vergrösserung einer Auflagefläche an den Innenseiten **4a** und **6a** der Innen- und Aussenscheibe **3** und **5** aufgebogen sind. Das Aufbiegen kann in einer besonderen Ausführungsform sogar soweit vorgenommen werden, dass die Schlitzränder gegen die Innenseiten **4a** und **6a** drücken. Diese Schlitzränder kann man dann z. B. mit einem auf die Schlitzränder und den benachbarten Innenscheibenbereich fokussierten Laserstrahl derart stark erwärmen, dass unter einem Eindringen der Schlitzränder in das Scheibenmaterial eine vakuumdichte Verschmelzung erreicht wird.

Auch in diesem Fall ist keine starre Verbindung von Innen- und Aussenscheibe 3 und 5 vorhanden. Das geschlitzte Rohr ist fähig, Ausgleichsbewegungen zwischen der Innenscheibe **3** und der Aussenscheibe **5** aufzunehmen.

Zwischen der Innen- und der Aussenscheibe **3** und **5** wird auf die oben angeführten, tiefen Drücke evakuiert. Auf beide Scheiben **3** und **5** lastet somit ein grosser Flächendruck, der beide Scheiben **3** und **5** gegeneinander drückt. Um eine gute Wärmeisolation und damit auch eine gute Schallisolation zu gewährleisten, muss zwischen beiden Scheiben **3** und **5** ein Abstand verbleiben. Damit nun die Innenseiten **4a** und **6a** der Innenund der Aussenscheibe **3** und **5** nicht gegeneinander bis zum gegenseitigen Anliegen oder bis zum Anliegen an einer Hauptseite **31 a** bzw. **31b** der Zwischenscheiben **22** zusammengedrückt werden, sind Abstandshalter **32** vorhanden. Diese Abstandshalter **32** können nun, wie in **Figur 1** gezeigt, fadenförmig, als zueinander parallele Schlaufen **33**, ausgehend von zueinander gegenüberliegenden Rändern **35** und **36** der Zwischenscheibe **22**, ausgebildet sein. Die fadenförmigen Abstandshalter **32** können lediglich in der Richtung umkehrend um die Ränder **35** und **36** verlaufen oder an den Rändern **35** bzw. **36,** wie in **Figur 1** dargestellt, in Leisten **37a** und **37b** gehalten sein.

Aufgrund einer einfacheren und somit preisgünstigeren Verlegbarkeit sind hier, im Gegensatz zum Stand der Technik, die Abstandshalter nicht mehr punktartig, sondern als Fäden verlegt.

Aufgrund der nicht mehr punktartigen Verlegung der Abstandshalter **32,** wobei jeder Abstandspunkt von anderen separiert war, können die hier verwendeten fadenförmigen Abstandshalter **32** als Signalleiter, wenn sie als Lichtleiter oder als elektrische Leiter ausgebildet sind, bzw. Heizelemente, wenn sie lediglich stromleitend ausgebildet sind, verwendet werden. Bei einer Verwendung als Signalleiter können die Abstandshalter **32** dann beispielsweise als Einbruchmelder eingesetzt werden. Werden sie als Heizelemente verwendet, können sie gute Dienste beim Evakuieren durch Aufheizen des Innenraums der Verschlusseinheit **1** leisten.

Im Gegensatz zu den aus dem Stand der Technik bekannten punktförmigen Abstandshaltern bilden die fadenförmigen Abstandshalter **32** Kammern **34.** Da nun die Fäden **32** keine gleiche exakte Dicke aufweisen und zwischen dem Verbindungselement **20** und der Stirnseite **27** der Zwischenscheibe **22** ein Zwischenraum **29** bestehen bleibt, werden auch diese Kammern **34** zufriedenstellend ausgepumpt. Dieser Auspumpvorgang kann, sofern die Kammerbildung sich dennoch als störend erweisen sollte, durch nicht dargestellte Abstandsstege an den Stirnseiten **27** behoben bzw. gemildert werden; über diese Abstandsstege kann beispielsweise auch das Verbindungselement **20** geführt werden.

Wird eine Montage der wenigstens eine Zwischenscheibe **22** aufweisenden Verschlusseinheit **1** in einer horizontalen Lage vorgenommen, so kann eine Ausrichtung der Scheibenanordnung bereits derart vorgenommen werden, dass der Zwischenraum **29** auch im zusammengepressten Zustand für ein Abpumpen ausreichend gross verbleibt. Ist einmal abgepumpt, besteht ein derart grosser Flächendruck, dass ausgenommen die oben angeführten Dilatationen eine Verschiebung der Zwischenscheibe **22** und des Verbindungselements **20** als Abdichtmittel nicht mehr erfolgen kann.

Die gesamte Scheibenanordnung der Verschlusseinheit **1** wird hauptsächlich durch den auf den Aussenseiten **4b** und **6b** der Innen- und der Aussenscheibe **3** und **5** lastenden Druck zusammengehalten. Die Scheibenanordnung sollte jedoch auch im nicht evakuierten Zustand zusammengehalten werden. Für diesen Zusammenhalt sind entlang der vier Seiten der Scheibenanordnung angeordnete Klemmleisten **39a** bis **39d** vorhanden. In **Figur 2** ist die Klemmleiste **39c** vergrössert zu sehen. Die Klemmleiste **39c** ist U-förmig mit zwei Backen **41a** und **41b** für eine Auflage im Randbereich an den Aussenseiten **4b** und **6b** der Innen- und der Aussenscheibe **3** und **5** ausgebildet. Ein U-Boden **42** der Klemmleiste **39c** ist leicht nach aussen gewölbt geformt. Distanziert vom Ansatz der Backen **41a** und **41b** sind je eine Noppe **43a** bzw. **43b** angeformt, welche jeweils auf der Stirnseite **45a** bzw. **45b** der Innen- bzw. Aussenscheibe **3** bzw. **5** zu liegen kommt. Direkt am Übergang des U-Bodens **42** in die jeweiligen Backen **41a** und **41b** sind je eine Ausnehmung **47a** und **47b** ausgebildet, welche ein elastisches Aufbiegen der Backen **41a** und **41b** erleichtern sollen. Die Klemmleisten **39a** bis **39d** können, wie in **Figur 2** dargestellt, in einem U-förmigen Dichtungsprofil **40** gegen Umwelteinflüsse abgedichtet gehalten werden, welches dann im Durchbruch **13** oder in einem Rahmen (z.B. Fensterrahmen) liegt. Als Material für das Dichtungsprofil **40** kann ein elastischer Kunststoff oder Gummi mit einer langen Lebensdauer verwendet werden.

Die gerade beschriebene Ausbildung der Klemmleisten **39a** bis **39d** soll eine unterschiedliche Ausdehnung der Innenscheibe **3** gegenüber der Aussenscheibe **5**, z.B. aufgrund unterschiedlicher Temperaturen, ermöglichen. In **Figur 2** ist ein Zustand dargestellt, bei dem Innen- und Aussenscheibe **3** und **5** gleiche Abmessungen haben. In **Fi gur 2** sind zudem Orte **49a** und **49b** einer mittleren Auflage des Abdichtmittels **20** auf den Innenseiten **4a** und **6a** der Innen- und der Aussenscheibe **3** und **5** markiert.

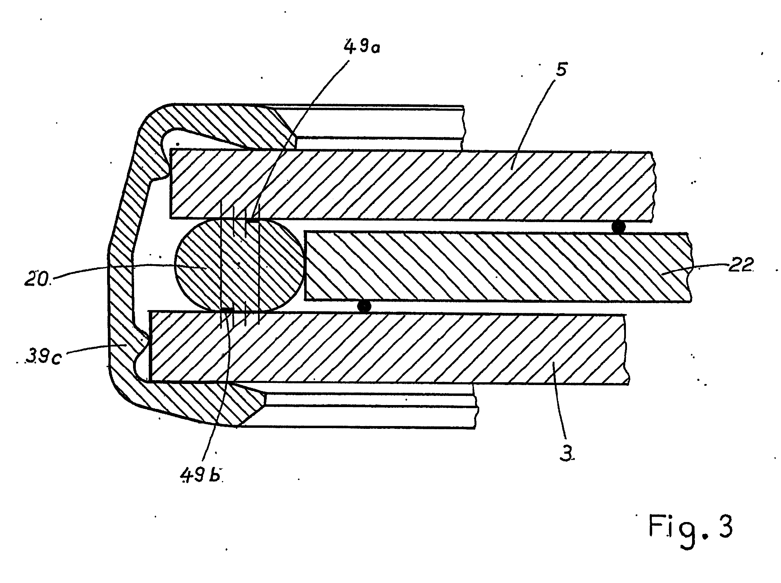

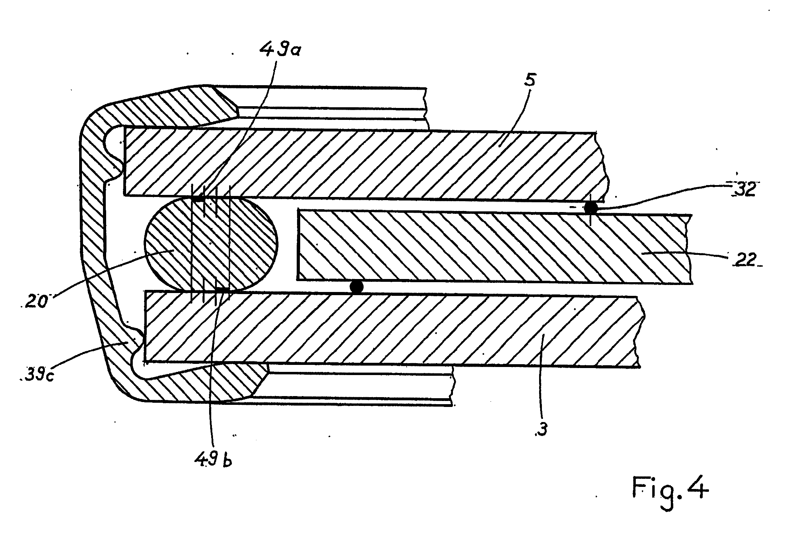

Einen Zustand, in dem sich die Innenscheibe **3** stärker ausgedehnt hat als die Aussenscheibe **5,** zeigt **Figur 3.** Das Gegenteil hierzu zeigt **Figur 4.** In beiden **Figuren 3** und **4** ist lediglich die Scheibenanordnung mit der Klemmleiste **39c** dargestellt. Die Verschiebung der Auflageorte **49a** und **49b** am Abdichtmittel **20** aufgrund einer Walkbewegung zwischen den Zuständen in den **Figuren 2** bis **4** sind gut erkennbar.

Im Gegensatz zum Stand der Technik kann die erfindungsgemässe Verschlusseinheit nachevakuiert werden.

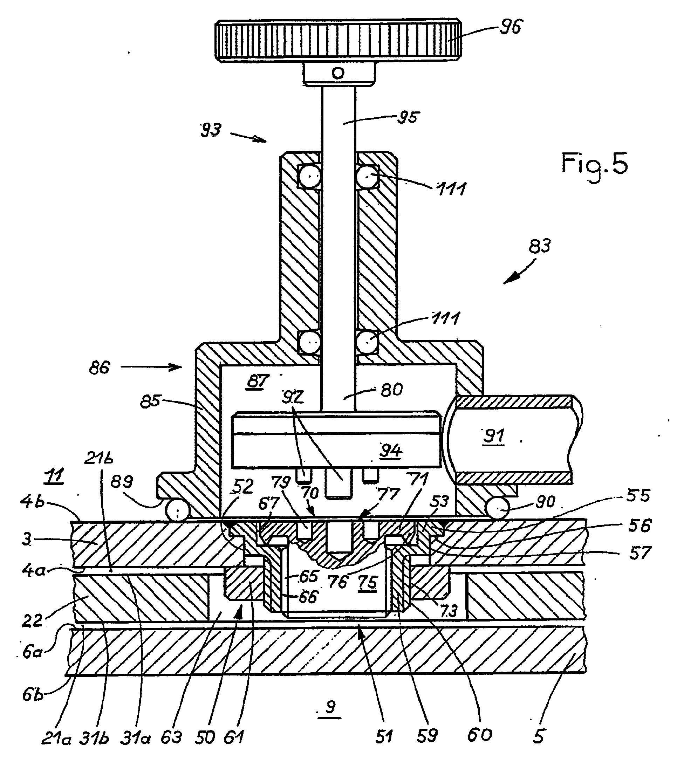

In **Figur 5** ist eine Absaugöffnung **50** in den in den **Figuren 1** bis **4** dargestellten Verschlusseinheit **1** zum Anschluss an eine nicht dargestellte Vakuumpumpe gezeigt. Die Absaugöffnung **50** mit einem Ventil **51** wird man vorzugsweise in der Innenscheibe **3** in einer der Scheibenecken anordnen. Das Ventil **51** ist, wie nachfolgend beschrieben, ausgebildet.

Die Innenscheibe **3** hat am Ort der Absaugöffnung **50** eine Stufenbohrung **52.** In dieser Stufenbohrung **52** sitzt ein Einsatz **53** mit einem oberen Rand **55**, der der Stufe **56** in der Stufenbohrung **52** angepasst ist. An den Rand **55** anschliessend ist ein Passteil **57** angeformt, welcher mit einer engen Spieltoleranz in den restlichen Teil der Stufenbohrung **52** einschiebbar ist. An diesen Passteil **57** schliesst sich ein im Durchmesser verringerte Endbereich **59** mit einem Aussengewinde **60** an. Die Dicken des oberen Randes **55**, des Passteils **57** und des Endteils **59** sind derart gewählt, dass eine Mutter **61** auf den Endteil **59** aufschraubbar ist, um den Einsatz **53** über der Scheibendicke der Innenscheibe **3** festzuklemmen. An der Aussenseite **4b** der Innenscheibe **3** ist der Einsatz **53** an seinem oberen Rand **55** mit der Innenscheibe **3** vakuumdicht verschweisst. Diese Verschweissung kann beispielsweise mit einem Laser vorgenommen werden.

Im Bereich der Absaugöffnung **50** hat die Zwischenscheibe **22** einen Durchbruch **63** zur räumlichen Aufnahme des Endteils **59** des Einsatzes **53** und der Mutter **61.**

Ausgehend von Endteil **59**, also in **Figur 5** von unten nach oben, hat der Einsatz **53** eine zylindrische Innenbohrung **65** mit einem Innengewinde **66.** Im oberen Teil des Einsatzes **53** erweitert sich diese Innenbohrung **65** stufenförmig in eine Eingangsbohrung **67.**

In den Einsatz **53** ist ein Verschlusselement **70** in **Figur 5** eingeschraubt dargestellt. Das Verschlusselement **70** sitzt in der Innenbohrung **65** des Einsatzes **53.** Das Verschlusselement **70** ist als zylindrischer Stopfen mit einem oberen scheibenförmigen Rand **71,** der stufenförmig in einen ein Aussengewinde **73** aufweisenden Stutzen **75** übergeht, ausgebildet. Das Aussengewinde **73** des Stutzens **75** ist passend zum Innengewinde **66** des Endteils **59** des Einsatzes **53** ausgebildet. Unterhalb des scheibenförmigen Randes **71** ist eine umlaufende Schneidkante **76** ausgebildet, welche sich beim Eindrehen des Verschlusselements **70** in den Einsatz **53** dichtend einschneidet.

Auf seiner Oberseite **77** hat das Verschlusselement **70** mehrere Sackbohrungen **79**, welche parallel zur Achse **80** des Verschlusselements **70** verlaufen.

Zum Nachevakuieren wird eine Nachevakuierungseinheit **83** über die mit dem Verschlusselement **70** verschlossene Absaugöffnung **50** gesetzt. Die Nachevakuierungseinheit **83** hat eine mit einem Haubenfuss **85** versehene Haube **86,** welche einen Haubeninnenraum **87** aufweist. Die Haube **86** ist auf der Aussenseite **4b** bzw. **6b** der Innenoder der Aussenscheibe **3** oder **5,** hier auf der Aussenseite **4b** der Innenscheibe **3,** über dem Ventil **51** mit eingeschraubtem Verschlusselement **70** auf einer Haubenfussstirnseite **89** des Haubenfusses **85** aufsetzbar. Der Haubenfuss **85** weist ein umlaufendes, seitlich über die Haubenfussstirnseite **89** vorstehendes Dichtelement 90 auf. Dieses als O-Ring ausgebildetes Dichtelement **90** ist dichtend auf die Scheibenaussenseite **4b** drückbar. Die Nachevakuierungseinheit **83** hat ferner einen Vakuumanschluss **91** für den Anschluss an die nicht dargestellte Vakuumpumpe. Die Nachevakuierungseinheit **83** hat einen von ausserhalb der Haube **86** wirkenden Kraftantrieb **93,** der auf ein verdrehbares Eingreifelement **94** für einen mechanischen Eingriff in die Oberseite **77** des Verschlusselements **70** wirkend ausgebildet ist. Der Kraftantrieb ist hier als absenkbares, abgedichtetes Drehteil **95** mit einem aussen liegenden Handrad **96** ausgebildet. Das Eingreifelement **94** ist ein Teller, der zu den Sackbohrungen **79** in der Oberseite **77** des Verschlusselements **70** passende vorstehende Stifte **97** hat. Der Teller **94** ist als Magnet und das Verschlusselement **70** aus ferromagnetischen Material ausgebildet, damit das mit dem Teller **94** aus dem Einsatz **53** herausgedrehte Verschlusselement **70** auch abgehoben werden kann.

Zum Nachevakuieren wird die Nachevakuierungseinheit **83** über dem mit dem Verschlusselement **70** noch verschlossenen Einsatz **53** gesetzt. Die (nicht dargestellte) Vakuumpumpe wird an den Vakuumanschluss **91** angeschlossen und dann abgepumpt. Ist im Haubeninnenraum **87** ein Druck erreicht, der etwa dem innerhalb der Verschlusseinheit (Glasscheibenanordnung) **1** entspricht, wird das Eingreifelement **94** durch Herunterdrücken des Handrades **96** zum Eingriff mit dem Verschlusselement **70** gebracht, wobei die Stifte **97** in die Sackbohrungen **79** greifen. Mit dem Handrad **96** wird nun das Verschlusselement **70** herausgedreht, welches magnetisch am Eingreifelement **94** (Teller) gehalten bleibt. Nach dem vollständigen Herausdrehen wird das Eingreifelement **94** mit dem Verschlusselement **70** in den Haubeninnenraum **87** nach oben gezogen, worauf die Innen- und die Eingangsbohrung **65** und **67** des Einsatzes **53** zum Abpumpen des Innenbereichs der Verschlusseinheit **1** vollständig frei sind. Da ein zu erreichender Innendruck tief liegt, sollte eine Abpumpöffnung so gross wie möglich sein, um eine Abpumpzeit verringern zu können. Je nach gewähltem Aufbau der Verschlusseinheit kann nun zur Beschleunigung des Abpumpens mit den als Stromleitern ausgebildeten Abstandshaltern **32** geheizt werden.

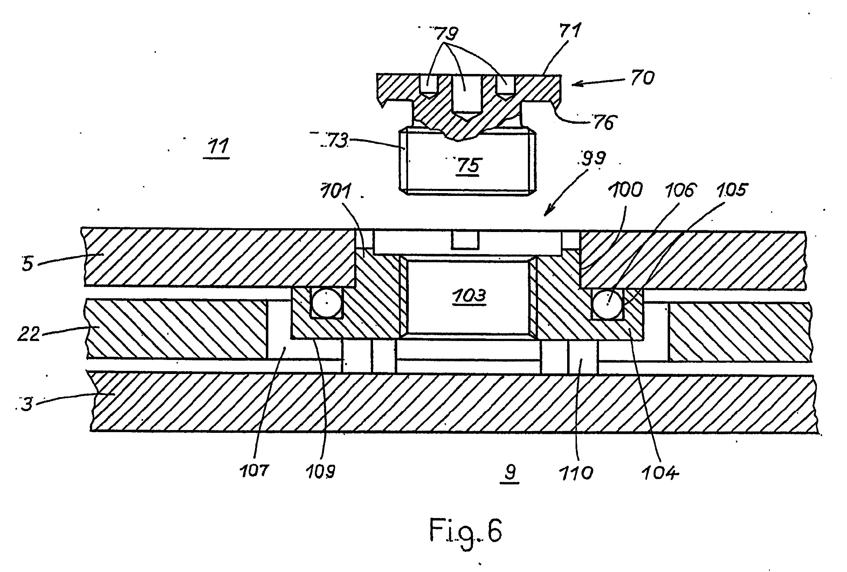

Als Variante zur Ausbildung eines Einsatzes **53** in **Figur 5** kann eine in **Figur 6** gezeigte Ausführungsvariante verwendet werden. Die in **Figur 6** gezeigte Absaugöffnung **99** hat in der Innen- oder in der Aussenscheibe **3** oder **5,** vorzugsweise in der Innenscheibe **3,** im Gegensatz zur Stufenbohrung **52** der Ausführungsvariante in **Figur** 5 eine einfach herzustellende zylindrische Durchgangsbohrung **100**. In der zylindrischen Durchgangsbohrung **100** sitzt mit einer engen Spielpassung ein Einsatz **101** mit einer Innenbohrung **103** passend zum Aussengewinde **75** des oben beschriebenen Verschlusselements **70.** Der Einsatz **101** hat an seinem in der Verschlusseinheit **1** zu liegen kommenden Teil einen umlaufenden Kragen **104** mit einer umlaufenden Nut **105** für einen Dichtring **106.** In der Zwischenscheibe **22** ist ein Durchbruch **107** ausgebildet, der mit einer grossen Passung den Kragen **104** aufnehmen kann. Zwischen der Oberseite **109** des Kragens **104** und der Innenseite **6a** der Aussenscheibe **5** ist ein Pressstück **110** angeordnet. Die Dicke des Pressstückes **110,** die Dicke des Dichtrings **106** und die Abmessungen des Einsatzes **101** sind nun mit Blick auf die Dicken der Innen- und Aussenscheibe **3** und **5** sowie der Zwischenscheibe **22** derart gewählt, dass durch das Zusammendrücken der Innen- und Aussenscheibe **3** und **5** durch den Aussendruck der Dichtring **106** dichtend gegen die Innenseite **4a** der Innenscheibe **3** gedrückt wird.

Anstelle eines manuellen Öffnens des Verschlusselements **70** des Ventils **51** kann dies auch über einen elektrischen Dreh- und Absenkantrieb erfolgen. Bei Verwendung einer derartigen Konstruktion können die Abdichtungen **111** des Drehteils **95** eliminiert werden.

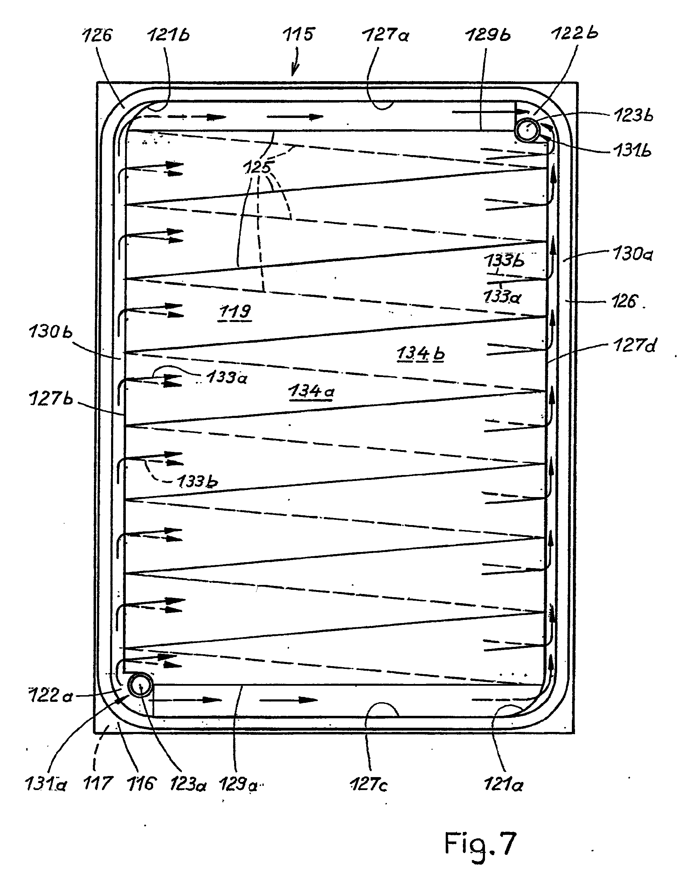

In **Figur 7** ist als Variante zur der in **Figur 1** dargestellten Verschlusseinheit **1** eine Verschlusseinheit 115 als thermisch und vorzugsweise als zusätzlich schallisolierende Gtasscheibenanordnung dargestellt. Im Gegensatz zur Verschlusseinheit **1** hat die Verschlusseinheit **115** zwei verschliessbare Öffnungen zum zwischen einer Innen- und einer Aussenscheibe **116** und **117** gelegenen Inneren. Zwischen der Innen- und der Aussenscheibe **116** und **117** ist auch hier eine einzige Zwischenscheibe **119** angeordnet; wobei auch hier statt der einen Zwischenscheibe **119** mehrere Zwischenscheiben vorhanden sein können. Die Ecken der Zwischenscheibe **119** weisen analog zu den Rundungen **25a** bis **25d** auch Rundungen **121a** und **121b** auf. Im Gegensatz zur Zwischenscheibe 22 sind hier jedoch nur zwei einander diametral gegenüberliegende Rundungen **121a** und **121b** vorhanden. Die restlichen beiden Ecken der Zwischenscheibe **119** weisen je eine Ausnehmung **122a** bzw. **122b** auf. Diese Ausnehmungen **122a** und **122b** geben Platz für je ein vorzugsweise in die Innenscheiben **116** eingesetztes Verschlusselement **123a** bzw. **123b.** Die beiden Verschlusselemente **123a** und **123b** könnten analog zum bereits oben beschriebenen Verschlusselement **70** ausgebildet sein; es wird hier jedoch eine bevorzugt ausgebildete Variante verwendet. Analog zur Verschlusseinheit **1** hat auch die Verschlusseinheit **115** einen fadenförmigen Abstandshalter **125,** der die beiden Hauptseiten (Oberseiten) der Zwischenscheibe **119** von den Innenseiten der Innen- und der Aussenscheibe **116** und **117** distanziert. Die Verschlusseinheit **115** hat auch ein zwischen den Innenseiten der Innen- und der Aussenscheibe **116** und **117** angeordnetes Verbindungselement **126** als Abdichtmittel. Der Abstandshalter **125** ist um zwei einander gegenüberliegende Stirnseiten (Schmalseiten) **127a** und **127b** der Zwischenscheibe **119** gewickelt, wobei jeweils ein Fadenende **129b** bzw. **129d** des Abstandshalters **125** zu den Verschlusselementen **123a** und **123b** geführt ist. Das Verbindungselement **126** verläuft entlang dieser Stirnseiten **127b** und **127d,** jeweils einen Zwischenraum **130a** und **130b** bildend, distanziert. Auf die Wirkungsweise dieser Zwischenräume **130a** und **130b** wird unten eingegangen. An den anderen Stirnseiten **127c** und **127a** der hier beispielsweise viereckig ausgebildeten Zwischenscheibe **119** liegt das Verbindungselement **126** an.

Im Inneren der Verschlusseinheit **1** sowie auch **115** soll ein möglichst tiefer Restgasdruck entsprechend dem eingangs geschilderten Knudse-Effekt erreicht werden. Vorzugsweise soll nun das verbleibende Restgas nicht eine dem Umgebungsgas entsprechende Zusammensetzung haben. Um nicht gewünschte Langzeiteffekte auszuschliessen und um gute Ausgangskriterien für einen unten erwähnten Getter zu schaffen, arbeitet man insbesondere mit einem Restgas definierter Zusammensetzung. Um ein Restgas vorgegebener Zusammensetzung zu erreichen, muss das Innere der Verschlusseinheit mit diesem Gas gespült werden. Zu Erleichterung dieses Spülens hat nun die Verschlusseinheit **115** nicht mehr nur eine Öffnung **50,** vorzugsweise in der Innenscheibe **3,** sondern zwei mit je einem Verschlusselement **123a** und **123b** verschlossene Öffnungen **131a** und **131b.** In **Figur 7** ist nun beispielsweise die Öffnung **131a** als eine Einlassöffnung für ein Spülgas und die Öffnung **131b** als Auslassöffnung für dieses Spülgas gewählt worden. Der Weg des Spülgases im Inneren der Verschlusseinheit **115** ist durch die Pfeile **133a** und **133b** angedeutet, wobei die durchgezogen dargestellten Pfeile **133a** einen Gasstrom in den Zwischenräumen **130a** und **130b** und im Zwischenraum zwischen der Innenseite der Innscheibe **116** und der benachbarten Scheibenhauptseite der Zwischenscheibe **119** kennzeichnen. Die gestrichelt dargestellten Pfeile **133b** kennzeichnen einen Gaststrom zwischen der Innenseite der Aussenscheibe **117** und der benachbarten Hauptscheibenseite der Zwischenscheibe **119.** Über den Zwischenraum **130b** ist eine einwandfreie Gasbeschickung zu den durch die fadenförmigen Abstandshalter **125** gebildeten Kammern **134a** und **134b** gewährleistet. Die Kammern **134a** befinden sich zwischen der Innenseite der Innenscheibe **116** und der benachbarten Hauptscheibenseite der Zwischenscheibe **119.** Die Kammern **134b** befinden sich zwischen der Innenseite der Aussenscheibe **117** und der benachbarten Hauptscheibenseite der Zwischenscheibe **119.** Mit der hier gezeigten Ausführungsvariante ist ein einwandfreies Gasspülen gewährleistet; tote Räume gibt es nicht.

Das Spülgas wird man bei einem Einsatz der Nachevakuierungseinheit **83** durch dessen Vakuumanschluss **91** einlassen bzw. auspumpen. Wird das Verschlusselement **123a** bzw. **123b** verwendet, erfolgt ein Gasein- bzw. -auslass analog über einen Vakuumanschluss **135** einer äquivalent ausgebildeten Nachevakuierungseinheit **136.**

Da die Anordnungen der Innen- und Aussenscheibe sowie der Zwischenscheibe hauptsächlich durch den auf den Aussenscheiben lastenden Aussendruck zusammen gehalten wird, sollte beim Spülen die Innen- gegen die Aussenscheiben mechanisch gepresst werden. Auf diese Pressung kann verzichtet werden, wenn beim Spülen bei einem gegenüber dem Aussendruck verringerten Druck zwischen den Scheiben gearbeitet wird.

Vorzugsweise wird man die beiden Verschlusselemente **123a** und **123b** identisch ausbilden. Die Konstruktion der beiden Verschlusselemente **123a** und **123b** ähnelt derjenigen des Verschlusselements **70.** Im Gegensatz zum Verschlusselement **70** können die beiden Verschlusselemente **123a** und **123b** einen Getter **137** aufnehmen.

Die mit dem Verschlusselement **123a** bzw. **123b** zusammenarbeitende Nachevakuierungseinheit **136** weist einen elektrischen Anschluss **139** für den fadenförmigen Abstandshalter **125** auf, welcher in diesem Fall elektrisch leitend als Heizdraht ausgebildet ist.

Analog zum Verschlusselement **70** weisen die Verschlusselemente **123a** und **123b** die zum Verschlusselement **70** äquivalenten nachfolgenden Elemente auf, wobei in der nachfolgenden Auflistung die in eckigen Klammern angeführten Bezugszeichen auf ein entsprechendes Element des Verschlusselements **70** hinweisen. Gleiches gilt auch für die Nachevakuierungseinheit **136.**

Die Nachevakuierungseinheit **136** hat eine Haube **141 [86]** mit einem Haubenfuss **142 [85],** einen Haubeninnenraum **143 [87],** einen den Haubenfuss **142** gegen die Aussenseite **145b [4b]** der Innenscheibe **116 [3]** abdichtendes, vorzugsweise als O-Ring ausgebildetes Dichtmittel **147 [90]** und einen Kraftantrieb **149 [93].** Der Kraftantrieb **149** hat ein auf einem Drehteil **150 [95]** sitzendes Handrad **151 [96],** welches über das Drehteil **150** auf ein Eingreifelement **153 [94]** wirkt. Das Eingreifelement **153** dient zum Herausschrauben des Verschlusselements **123a** bzw. **123b.**

Analog zum Einsatz **53** sitzt auch in der Öffnung **131a** bzw. **131b** in den Innenscheiben **116** ein Einsatz **155.** Der Einsatz **155** besteht aus einem elektrisch gut leitenden Metall. Die Öffnungen **131a** und **131b** sind analog zur Öffnung **50** als Stufenbohrung ausgebildet. Auch hier hat der Einsatz **155** einen oberen Rand **156,** der auf der Stufe der Stufenbohrung sitzt und gasdicht mit der Aussenseite **145b** der Innenscheibe **116** verschweisst ist. Der Einsatz **155** ist als gestufte Hülse ausgebildet, deren zylindrischer Ausgangsteil ein Innengewinde für ein hierzu passendes Aussengewinde eines Stutzens **157** des Verschlusselements **123a** bzw. **123b** hat.

Die Zwischenscheibe **119** hat analog zur Zwischenscheibe **22** ebenfalls einen analog ausgebildeten Durchbruch **159**. Etwa mittig zum Durchbruch **159** ist auf der Innenseite **160a [6a]** der Aussenscheibe **117** eine Aufreisseinheit **161** angeordnet. Die Aufreisseinheit **161** hat einen auf einem Teller **163** angeordneten Aufreissdorn **164,** dessen annähernd senkrecht zu den Scheibenaussenseiten **145b** und **160a** gerichtete Länge derart gewählt ist, dass er in den Stutzen **157** des Verschlusselements **123a** bzw. **123b** eindringen kann. Der Tellerrand **165** ist leicht erhöht und mit dem Fadenende **129a** bzw. **129b** des Abstandshalters **125** sowie über ein elektrisches Kontaktelement **167** mit dem Einsatz **155** verbunden. Der Einsatz **155** ist über ein weiteres elektrisches Kontaktelement **169** in der Stirnseite **170** des Haubenfusses **142** über die Nachevakuierungseinheit **136** mit dem elektrischen Anschluss **139** elektrisch verbunden.

Analog zum Verschlusselement **70** hat auch das Verschlusselement **123a** bzw. **123b** eine dichtende Schneidkante **171**. Der Einsatz **155** ist analog zum Einsatz **53** ebenfalls mit einer auf der Innenseite **145a** der Innenscheibe **116** aufliegenden Mutter **173** gehalten.

Zur Langzeitverbesserung des Restgasdruckes in der Verschlusseinheit **1** bzw. **115** kann ein Getter verwendet werden. Handelt es sich um eine Fensterscheibenanordnung, so ist darauf zu achten, dass der noch frische Getter, wie auch der mit Restgasatomen bzw. -molekülen beladene Getter, transparent ist, sofern eine Getterbeschichtung auf den Innenseiten der Scheiben gewählt wird. Absorbiert der Getter bzw. der mit Restgasmolekülen beladene Getter sichtbare Strahlung, so sollte er am Scheibenrand angeordnet werden. Wird als Verbindungselement (Abdichtelement) 20 ein mit Öffnungen versehenes Rohr bzw. ein geschlitztes Rohr verwendet, kann der Getter im Rohr gehalten werden.

Im Gegensatz zum Verschlusselement **70** haben nun die Verschlusselemente **123a** und **123b** einen Innenraum **175,** der durch eine Abdeckung **176** nach aussen und als Stutzenabschluss **177** gegen den Durchbruch **159** abgeschlossen ist. Die Abdeckung **176** trägt auf ihrer dem Innenraum **175** zugewandten Seite den Getter **137**. Der Stutzenabschluss **177** ist als verhältnismässig dünnes Element z.B. aus Blech ausgebildet. Der Stutzenabschluss **177** wird beim Einschrauben des Verschlusselements **123a** bzw. **123b** in den Einsatz **155** vom Aufreissdorn **164** durchstossen, wodurch das sich im Inneren der Verschlusseinheit **115** befindliche Restgas reagierend in Kontakt mit dem Getter kommt und somit das Vakuum im Innern erhöht bzw. langzeitig aufrecht erhält.

Vorzugsweise wird man nun als Getter ein Material nehmen, dass z.B. mit Sauerstoff, Stickstoff oder Wasserdampf einen Farbumschlag erzeugt. Wird nun der Getter auf einer transparenten Unterlage aufgebracht, so kann dieser Farbumschlag als Zeichen für ein sich verschlechterndes Vakuum dienen und somit eine Notwendigkeit einer Nachevakuierung anzeigen. Den entsprechenden Getter wird man in einer Vakuumaufdampfanlage auf einer transparenten Unterlage z.B. Glas aufbringen. Die Unterlage befindet sich bei der Beschichtung bereits im Verschlusselement, welches dann auch in dieser Anlage gasdicht mit der Abdeckung **177** verschlossen wird.

Vorzugsweise wird man ein bereits "begastes" Verschlusselement **123a** bzw. **123b** in der Nachevakierungseinheit **136**, welche jedoch auch für ein erstes Evakuieren verwendbar ist, durch einen nicht dargestellten Verschiebemechanismus auswechselbar gestalten. Das Evakuieren kann nun lediglich über eine Evakuierungseinheit oder aber auch über zwei Evakuierungseinheiten erfolgen.

Wie oben bereits ausgeführt kann über die Nachevakuierungseinheiten **123a** und **123b** ein elektrischer Strom durch den als Heizelement ausgebildeten fadenförmigen Abstandshalter geschickt werden. Das Innere der Verschlusseinheit **115** kann somit aufgeheizt werden, wodurch ein Evakuierungsvorgang verkürzt werden kann.

Da jedes Verschlusselement **123a** und **123b** in seinem Inneren eine Getteranordnung aufweist, ist gegenüber der Darstellung in **Figur 5** eine Verbindung des Eingreifelements **153,** welches auch hier magnetisch ausgebildet ist, geringfügig abgeändert. Es sind hier nur noch zwei Stifte **179a** und **179b** vorhanden, welche in zwei entsprechende Aussparungen **180a** und **180b** des Verschlusselements **123a** bzw. **123b** eingreifen. Damit eine magnetische Halterung möglich ist, muss selbstverständlich jedes Verschlusselement **123a** und **123b** aus einem magnetisierbaren Material bestehen.

Wie oben ausgeführt ist, kann der Innenraum zwischen der Innen- und der Aussenscheibe **3** bzw. **116** und **5** bzw. **117** mit einem Verbindungselement, welches als beschichteter Kunststoffring, als ein im Umfang geschlossenes oder koaxial mit einem Mantelschlitz versehenes Rohr ausgebildet ist, derart abgedichtet werden, dass eine oben erklärte Beweglichkeit der Scheibenränder von Innen- und Aussenscheibe gegeneinander möglich ist. Anstelle der oben beschriebenen Ausführungsformen des Verbindungselements kann dieses auch ausgehend von einem einen koaxialen Mantelschlitz aufweisenden, als liegendes Ω (Omega) geformtes Verbindungselement ausgebildet sein. Die Ω-Wölbung ist faltig, d.h. faltenbalgähnlich ausgebildet. Die nun vertikal verlaufenden Ω-Fusselementenden werden mit der jeweiligen Scheibeninnenseite fest verschweisst. Unterschiedliche thermische Ausdehnungen der Ω-Fusselementenden und der sie aufnehmenden Scheibenbereiche treten nicht auf, da der jeweilige Scheibenbereich an der Verschweissung mit dem betreffenden Bereich des Fussendes die annähernd gleiche Temperatur hat. Eine auszugleichende Bewegung zwischen der Innenund der Aussenscheibe nimmt dann die faltige Ω-Wölbung auf. Eine Längs- sowie eine Querbewegung können ausgeglichen werden.

Die in **Figur 1** dargestellten Leisten **37a** und **37b** können als U-förmige Leisten ausgebildet sein, wobei dann der U-Boden auf der Stirnseite (Seite 35 bzw. 36) der Zwischenscheibe **22** anliegt. Beim Abpumpen fliesst dann das Gas aus den Kammern **34** in **Figur 1** parallel zu den Abstandshaltern **32** bzw. **33** in Richtung Verbindungselement **(20)** (Abdichtmittel) und an diesem im Innenraum der U-förmigen Leisten entlang. Vorzugsweise wird man die U-förmige Leisten mit Schlitzen **181** versehen, in denen die fadenförmigen Abstandshalter **32** liegen. Durch diese Schlitze kann dann zusätzlich Gas aus den Kammern **34** eintreten. Der Gasfluss ist durch die Pfeile **183** angedeutet.

## Patentansprüche

1. Verschlusseinheit **(1; 115)** mit einem geringen Wärmedurchgang zwischen einem Innen- und einem Aussenraum **(9, 11)** zum Verschluss eines Durchbruchs **(13)** in einer Wand **(15)** zwischen Innen- und Aussenraum **(9, 11)** mit einer Innenscheibe **(3)** und einer von der Innenscheibe **(3; 116)** distanzierten Aussenscheibe **(5; 117)**, wobei die Innenscheibe **(3; 116)** mit der Aussenscheibe **(5; 117)** im Bereich beider Scheibenränder **(17, 19)** mittels eines Verbindungselements **(20; 126)** gasdicht verbunden ist, und zwischen der Innen- und der Aussenscheibe **(3, 5; 116, 117)** ein gegenüber einem Umgebungsdruck ausserhalb der Innen- bzw. Aussenscheibe **(3, 5; 116, 117)** reduzierter Innengasdruck besteht, **dadurch gekennzeichnet, dass** das Verbindungselement **(20; 126)** die Innenscheibe **(3; 116)** mit der Aussenscheibe **(5; 117)** nicht starr, sondern gegeneinander bewegbar, insbesondere eine Walkbewegung ermöglichend, verbindet, um beispielsweise thermische Dilatationsunterschiede zwischen Innen- und Aussenscheibe **(3, 5; 116, 117)** auszugleichen.

2. Verschlusseinheit **(1, 115)** nach Anspruch 1, **gekennzeichnet durch** wenigstens eine zwischen der Innen- und der Aussenscheibe **(3, 5; 116, 117)** angeordnete Zwischenscheibe **(22; 119)**, wobei benachbarte Hauptscheibenseiten einen Scheibenabstand aufweisen, der kleiner ist als die mittlere freie Weglänge der Moleküle eines zwischen der Innen- und der Aussenscheibe befindlichen Restgases.

3. Verschlusseinheit **(1, 115)** nach Anspruch 2, **dadurch gekennzeichnet, dass** jede Zwischenscheibe **(22; 119)** einen Aussenrand **(27)** hat, dessen Eckenbereiche mit einem Rundungsradius grösser als 25 mm abgerundet sind und das Verbindungselement **(20; 126)** an dem Aussenrand bzw. den Aussenrändern **(27)** benachbart, die Innenseiten **(4a, 6a; 145a, 160a)** der Innen- und der Aussenscheibe **(3, 5; 116, 117)** gegeneinander dichtend, verläuft.

4. Verschlusseinheit **(1, 115)** nach einem der Ansprüche 1 bis 3, **gekennzeichnet durch** fadenförmige Distanzhalter **(32; 125)** zwischen zwei benachbarten Hauptscheibenoberflächen, wobei vorzugsweise die fadenförmigen Distanzhalter **(32; 125)** lediglich an den Scheibenrändern **(27; 127a, 127b)** gehalten sind.

5. Verschlusseinheit **(1, 115)** nach Anspruch 2 oder 3, **gekennzeichnet durch** fadenförmige Distanzhalter **(32; 125)** zwischen zwei benachbarten Hauptscheibenoberflächen, wobei jeder Distanzhalter **(32; 125)** am Scheibenrand jeder Zwischenscheibe **(22; 119)** gehalten, vorzugsweise um einander gegenüberliegende Scheibenränder verlaufend, gewickelt ist.

6. Verschlusseinheit **(1, 115)** nach Anspruch 4 oder 5, **dadurch gekennzeichnet, dass** die fadenförmigen Distanzhalter **(32; 125)** als Signalleiter und/oder als Heizelement ausgebildet sind.

7. Verschlusseinheit **(1, 115)** nach einem der Ansprüche 1 bis 6, **dadurch gekennzeichnet, dass** das Verbindungselement **(20; 126)** als elastisch federndes, in sich längs geschlossenes Element mit einer anschmiegbaren, jedoch mit einer bei niedrigen Drücken nicht gasenden Oberfläche, insbesondere mit einer Metall beschichteten Oberfläche, ausgebildet ist.

8. Verschlusseinheit **(1, 115)** nach einem der Ansprüche 1 bis 7, **gekennzeichnet durch** ein in der Innen- bzw. Aussenscheibe **(3, 5; 116, 117)** angeordnetes Ventil **(51)** zum wiederholbaren Nachevakuieren auf einen vorgegebenen Innengasdruck.

9. Verschlusseinheit **(1, 115)** nach Anspruch 8, **dadurch gekennzeichnet, dass** das Ventil **(51)** eine mit einem Verschlusselement **(70; 123a, 123b)** versehene, verschliessbare und wieder aufmachbare, in der Innen- oder in der Aussenscheibe **(3, 5; 116, 117)** angeordnete Absaugöffnung **(50, 99; 131a, 131b)** hat, wobei das Verschlusselement **(70; 123a, 123b)** in die Absaugöffnung **(50, 99; 131a, 131b)** vakuumdicht einschraubbar ausgebildet ist.

10. Nachevakuierungseinrichtung **(83; 136)** für eine Verschlusseinheit **(1, 115)** nach Anspruch 8 oder 9 mit einem von aussen in die Innen- oder Aussenscheibe **(3, 5; 116, 117)** der Verschlusseinheit **(1; 115)** vakuumdicht ein- und ausschraubbaren Verschlusselement **(70; 123a, 123b),** wobei die Nachevakuierungseinrichtung **(83; 136)** eine einen Haubenfuss **(85; 142)** aufweisende Haube **(86; 141)** mit einem Haubeninnenraum **(87; 143)** hat, wobei die Haube **(86; 141)** auf der Aussenseite **(4b, 6b; 145b)** der Innen- oder der Aussenscheibe **(3, 5; 116)** über dem Ventil **(51)** mit eingeschraubtem Verschlusselement **(70; 123a, 123b)** auf einer Haubenfussstirnseite **(89; 170)** des Haubenfusses **(85; 142)** aufsetzbar ist, und der Haubenfuss **(85; 142)** ein umlaufendes, seitlich über die Haubenfussstirnseite **(89; 170)** vorstehendes Dichtelement **(90; 147)** aufweist, welches dichtend auf die Scheibenaussenseite **(4b, 6b; 145b)** drückbar ist, und die Nachevakuierungseinrichtung **(83; 136)** einen Vakuumanschluss **(91; 135)** für den Anschluss einer Vakuumpumpe und ein durch einen von ausserhalb der Haube **(86; 141)** wirkenden Kraftantrieb **(93; 149)** hat, der auf ein verdrehbares Eingreifelement **(94; 153)** für einen mechanischen Eingriff in die Oberseite **(77)** des Verschlusselements **(70; 123a, 123b)** wirkend ausgebildet ist, um das Verschlusselement **(70; 123a, 123b)** aus der Absaugöffnung **(50, 99; 131a, 131b)**, insbesondere bei bereits durch die Vakuumpumpe evakuierten Haubeninnenraum **(87; 143)**, herauszuschrauben.
